# EUROPÄISCHE PATENTSCHRIFT

(11) **EP 2 064 575 B1**
(45) Veröffentlichungstag und Bekanntmachung des Hinweises auf die Patenterteilung: **13.03.2013**
(21) Anmeldenummer: 07820078.9
(22) Anmeldetag: 07.09.2007
(51) Int. Cl.: G02B 6/38

(54) **VERBINDUNGSTEIL FÜR EINE OPTISCHE VERBINDUNG UND VERFAHREN ZUM VERBINDEN ZWEIER LICHTWELLENLEITER**
CONNECTING PART FOR AN OPTICAL CONNECTION AND METHOD FOR CONNECTING TWO OPTICAL FIBERS
PARTIE DE LIAISON POUR UNE LIAISON OPTIQUE ET PROCÉDÉ POUR LIER DEUX FIBRES OPTIQUES

(30) Priorität: 20.09.2006 CH 15092006
(43) Veröffentlichungstag der Anmeldung: 03.06.2009
(73) Patentinhaber: DIAMOND S.A., CH-6616 Losone-Locarno (CH)
(72) Erfinder: UBOLDI, Harry, CH-6596 Godola (CH)
(74) Vertreter: Hepp Wenger Ryffel AG
(86) Internationale Anmeldenummer: PCT/EP2007/059425
(87) Internationale Veröffentlichungsnummer: WO 2008/034727

(56) Entgegenhaltungen:
- WO-A-2004/001471
- WO-A-2004/001472
- GB-A- 2 030 723
- US-A- 4 913 512
- US-A- 5 315 682

## Beschreibung

Die Erfindung betrifft ein Verbindungsteil für eine optische Verbindung eines ersten Lichtwellenleiters mit einem zweiten Lichtwellenleiter gemäss dem Oberbegriff von Anspruch 1. Weiterhin betrifft die Erfindung ein Verfahren zum Verbinden zweier Lichtwellenleiter gemäss dem Oberbegriff von Anspruch 8. Derartige Verbindungsteile werden insbesondere für einseitig oder zweiseitig vorkonfektionierte Lichtwellenleiter-Kabel verwendet. Solche Kabel sind dem Fachmann auch unter den Begriffen "Pigtail" (einseitig) und "Patchcord" (zweiseitig) bekannt.

Aus dem Stand der Technik ist beispielsweise durch die WO 2004/001471 ein Steckerteil für eine optische Steckverbindung bekannt geworden, dessen Steckerstift nach einer werkseitigen Vormontage mit einer Stifthalterung verbunden ist. Die Fertigstellung des Steckerteils erfolgt unter feldmässigen Bedingungen, wobei der Lichtwellenleiter des Steckerstifts mit einem Lichtwellenleiter eines Lichtwellenleiter-Kabels verschweisst wird. Um diese Schweissung zu ermöglichen, weist die Stifthalterung zwei schwenkbare Mantelteile auf, in deren Schwenkbereich die Schweissstelle freigegeben werden kann. Die Stifthalterung ist zweiteilig ausgebildet, wobei jedem Teil ein schwenkbares Mantelteil zugeordnet ist. Die fertig gestellte Stifthalterung mit den miteinander verschweissten Lichtwellenleitern wird dann in ein Steckergehäuse eingesetzt, das schliesslich zur Herstellung einer optischen Steckverbindung in ein korrespondierendes Buchsenteil einsteckbar wäre. Solche Steckverbindungen haben den Nachteil, dass sie verhältnismässig viel Platz benötigen. Weiter hat sich insbesondere gezeigt, dass beispielsweise für Reparaturen beschädigter Lichtwellenleiter-Kabel Steckverbindungen nicht geeignet sind. Denn neben den vorgenannten Nachteilen treten bei Steckverbindungen Dämpfungsverluste auf.

Ausserdem ist aus US 5,315,682 ein Spleiss-Schutz für Unterwasseranwendungen bekannt, welcher aus einem zweiteiligen mechanischen Schutz besteht und in einer ebenfalls zweiteiligen Hülse verschlossen wird. Zwei Lichtwellenleiter müssen also ungeschützt und völlig frei miteinander verbunden bzw. gespleisst werden und können anschliessend mit dem Spleiss-Schutz versehen werden. Dabei ist bei der Montage des Spleiss-Schutzes auf eine korrekte Ausrichtung der Lichtwellenleiter beidseitig der empfindlichen Spleissstelle zu achten.

Es ist daher eine Aufgabe der Erfindung, die Nachteile des Bekannten zu vermeiden, insbesondere ein Verbindungsteil der eingangs genannten Art zu schaffen, das besonders für einen Reparatureinsatz geeignet ist. Insbesondere soll das Verbindungsteil für Pigtails oder Patchcords verwendet werden können. Das Verbindungsteil soll sich sodann durch Kostenvorteile und eine einfache Handhabung auszeichnen.

Diese Aufgabe wird erfindungsgemäss mit einem Verbindungsteil gelöst, dass die Merkmale im Anspruch 1 aufweist. Im Gegensatz zur WO 2004/001471 ist keine vormontierbare Stifthalterung, sondern eine vormontierbare Kabelhalterung vorgesehen. Statt eines Steckerstifts kann in einem ersten Kabelaufnahmeabschnitt ein Ende eines Lichtwellenleiter-Kabels, d.h. ein erster Lichtwellenleiter, gehalten sein. Durch die Befestigung der Überwurfhülse an der Kabelhalterung kann eine kompakte Verbindung zweier Lichtwellenleiterkabel auf vorteilhafte Art und Weise hergestellt werden. Mit Hilfe der Überwurfhülse können die zusammensetzbar ausgebildeten Elemente der Kabelhalterung einfach zusammengehalten werden. Da die beiden Lichtwellenleiter nur miteinander verschweisst sind, können Dämpfungsverluste vermieden werden.

Beispielsweise kann nur der zweite Kabelaufnahmeabschnitt zusammensetzbar ausgebildet sein. Selbstverständlich kann die Kabelhalterung insgesamt zusammensetzbar ausgebildet sein, wobei sie analog zur WO 2004/001471 aus zwei im Wesentlichen identischen Schalenteile bestehen kann, die auf einer durch die Längsmittelachse verlaufenden Ebene zusammensetzbar sind. Weiterhin wäre es denkbar, innerhalb des zweiten Kabelaufnahmeabschnitts eine teilbare Schutzhülse anzuordnen, welche um die Schweissstelle schliessbar wäre. Eine derartige Schutzhülse ist aus der WO 2004/001472 bekannt geworden.

Das Befestigungsmittel zum Befestigen der Überwurfhülse an der Kabelhalterung kann eine Schraubverbindung sein. Selbstverständlich wären aber auch andere Befestigungsmittel, beispielsweise Schnapp- oder Rastverbindungen denkbar. Bei einer Schraubverbindung handelt es sich um eine vorteilhafte, lösbare Verbindungsanordnung, die eine gute Fixierung ermöglicht.

Für eine besonders vorteilhafte Schraubverbindung kann im Bereich des kabelseitigen Endes des ersten Kabelaufnahmeabschnitts ein Aussengewinde für die Schraubverbindung mit der Überwurfhülse vorgesehen sein.

Das Aussengewinde kann an einem am kabelseitigen Ende der Kabelhalterung angeordneten Krimpteil aus Metall angeordnet sein. Ein solches Krimpteil kann einen vorteilhaften Abschluss der Kabelhalterung bilden. Die Kabelhalterung selbst kann aus einem Kunststoff bestehen. Die Überwurfhülse kann wie die Kabelhalterung aus einem Kunststoff oder wie das Krimpteil aus einem Metall bestehen.

Die Überwurfhülse kann als hohlzylindrisches Bauteil ausgestaltet sein, auf dessen Innenseite ein zum Aussengewinde korrespondierendes Innengewinde angeordnet ist. Die Überwurfhülse kann eine Einführseite aufweisen, über welche die Überwurfhülse auf den zweiten Kabelaufnahmeabschnitt bringbar ist. Auf der der Einführseite gegenüberliegenden Seite der Überwurfhülse kann ein nach innen gerichteter, vorzugsweise umlaufender Kragen angeordnet sein, der einen Anschlag bildet. Dieser Anschlag wirkt in Endstellung mit einer korrespondierenden Schulter der Kabelhalterung zusammen, und legt somit die Endposition nach vollständigem Aufschrauben der Überwurfhülse fest.

In einer weiteren Ausführungsform kann der zweite Kabelaufnahmeabschnitt wenigstens ein Mantelteil aufweisen, das an einem Gelenk um einen bestimmten Schwenkwinkel zwischen einer Öffnungsstellung und einer Schliessstellung schwenkbar ist. Dabei kann die Schweissstelle im Schenkbereich des Mantelteils liegen. Vorteilhaft ist es hier jedoch, wenn zwei schwenkbare Mantelteile vorgesehen sind, die zusammensetzbar sind. Bei ausgeschwenkten Mantelteilen kann eine Schweissung der beiden Lichtwellenleiter miteinander auf besonders einfache Art und Weise erfolgen.

Besonders vorteilhaft könnte es sein, wenn der erste Kabelaufnahmeabschnitt einstückig ausgebildet ist. Der zweite Kabelaufnahmeabschnitt kann dabei aus zwei Mantelteilen bestehen, die je über ein Gelenk mit dem ersten Kabelaufnahmeabschnitt verbunden sind. Auf Grund der geringen Zahl von Bauteilen für das Verbindungsteil resultiert eine vorteilhafte Handhabung.

Die Erfindung betrifft weiterhin ein Verfahren zum Verbinden zweier Lichtwellenleiter, das die Merkmale im Anspruch 9 aufweist.

Weitere Einzelmerkmale und Vorteile der Erfindung ergeben sich aus dem nachstehend beschriebenen Ausführungsbeispiel und aus den Zeichnungen. Es zeigen:
- Figur 1: eine perspektivische Explosionsdarstellung eines erfindungsgemässen Verbindungsteils,
- Figur 2: eine perspektivische Darstellung eines Verbindungsteils mit einer vormontierten Kabelhalterung und einer Überwurfhülse,
- Figur 3: einen Querschnitt durch eine Verbindung zweier Lichtwellenleiter mit dem Verbindungsteil gemäss Figur 2 vor der Montage der Überwurfhülse,
- Figur 4: einen Querschnitt durch die Verbindung zweier Lichtwellenleiter mit dem Verbindungsteil gemäss Figur 2 mit montierter Überwurfhülse,
- Figur 5: eine Kabelanordnung (Patchcord-Kabel), das zweiseitig mit Kabelhalterungen versehen ist. und
- Figur 6: eine Kabelanordnung (Pigtail-Kabel), das einseitig mit der Kabelhalterung gemäss Figur 2 versehen ist.

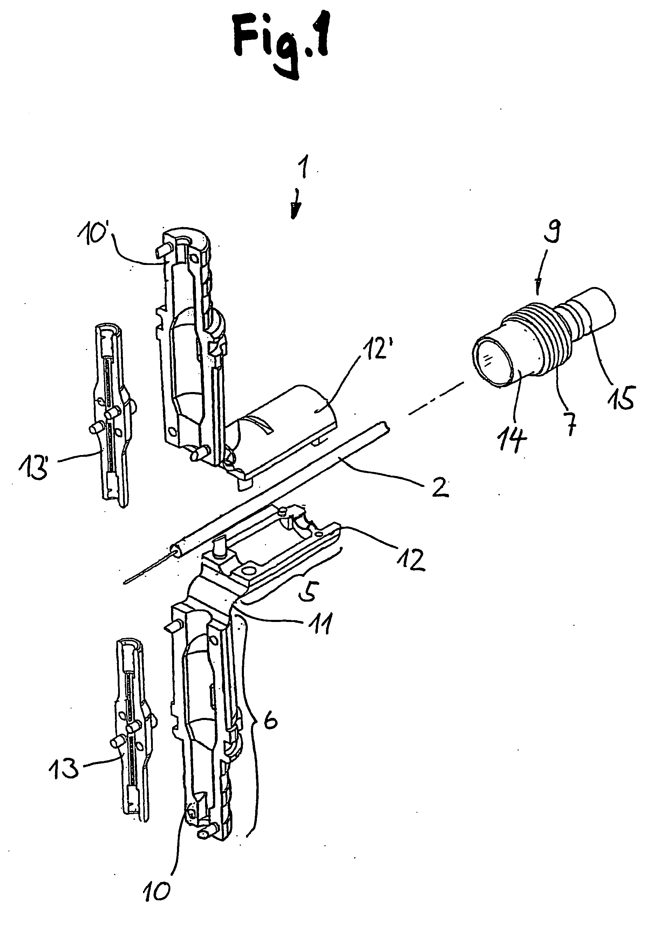

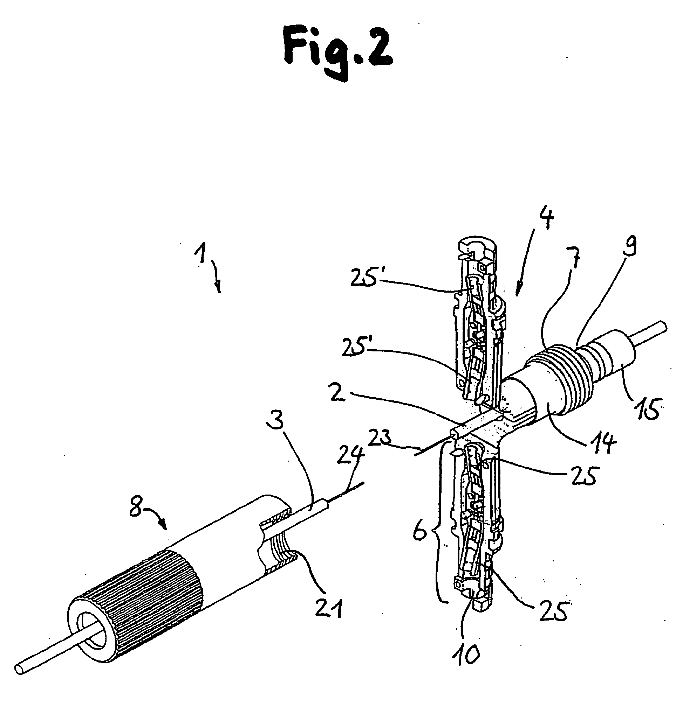

Figur 1 zeigt die einzelnen Bestandteile für ein gesamthaft mit 1 bezeichnetes Verbindungsteil. Das Verbindungsteil 1 besteht im Wesentlichen aus einer Kabelhalterung 4, in der im vormontierten Zustand der mit 2 bezeichnete erste Lichtwellenleiter gehalten ist und einer Überwurfhülse 8. Die Kabelhalterung besteht aus zwei Schalenteilen, die entlang der Längsachse L zusammensetzbar ausgebildet sind. Jedes Schalenteil besteht aus einem ausschwenkbaren Mantelteil 10 bzw. 10' und einem mit diesem über ein Filmscharnier 11 verbundenen Mantelteil 12 bzw. 12'. Weiterhin ist ein Krimpteil 9 erkennbar, mit welchen die Schalenteile zusammengehalten werden können (vgl. nachfolgende Fig. 2). Innerhalb des Kabelaufnahmeabschnitts 6 im jeweiligen Mantelteil 10 bzw. 10' ist eine teilbare Schutzhülse mit Schutzhülsenteilen 13 bzw. 13' angeordnet, welche wiederum schliessbar ist. Der erste Kabelaufnahmeabschnitt 5 könnte selbstverständlich einstückig ausgebildet sein.

Der grundsätzliche Aufbau der Kabelhalterung 4 entspricht in analoger Weise dem Aufbau der Stifthalterung, wie Sie in der WO 2004/001472 beschrieben ist. Die vorliegende Kabelhalterung unterscheidet sich - neben dem anderen Einsatzzweck - jedoch dadurch, dass ein zusätzliches Teil (i.e. Krimphülse 9) zum Zusammenhalten der Schalenteile vorgesehen ist. Bezüglich weiterer konstruktiver Details wird deshalb auf die WO 2004/001472 verwiesen, die hiermit ausdrücklich als Teil der Offenbarung dieser Anmeldung gilt. Die Ausgestaltung der Kabelhalterung 1 gemäss Figur 1 ist nahezu identisch mit der in Fig. 1 der WO 2004/001472 gezeigten Stifthalterung. Selbstverständlich könnte allenfalls auf die Schutzhülse (13, 13') verzichtet werden, wie dies beispielsweise aus der WO 2004/001471 bekannt geworden ist.

Wie aus Figur 2 hervorgeht, wird zur Verbindung zweier Lichtwellenleiter zum Herstellen einer optischen Verbindung in der Praxis vorteilhaft eine vormontierte Kabelhalterung und eine nachfolgend näher beschriebene Überwurfhülse 8 verwendet. Die jeweiligen Lichtwellenleiter 2 und 3 verfügen über blanke Lichtwellenleiterenden 23 und 24, die durch ein Schweissverfahren miteinander verbunden werden können. Ersichtlicherweise sind die beiden Schalenteile im Bereich der Mantelteile 12 und 12' durch das Krimpteil 9 zusammengehalten. Die durch das Krimpteil 9 aneinander fixierten Mantelteile definieren einen ersten Kabelaufnahmeabschnitt 5, in dem der erste Lichtwellenleiter 2 gehalten ist. Die Mantelteile 10 und 10' ergeben einen zweiten Kabelaufnahmeabschnitt 6, in dem der zweite Lichtwellenleiter 3 aufnehmbar ist.

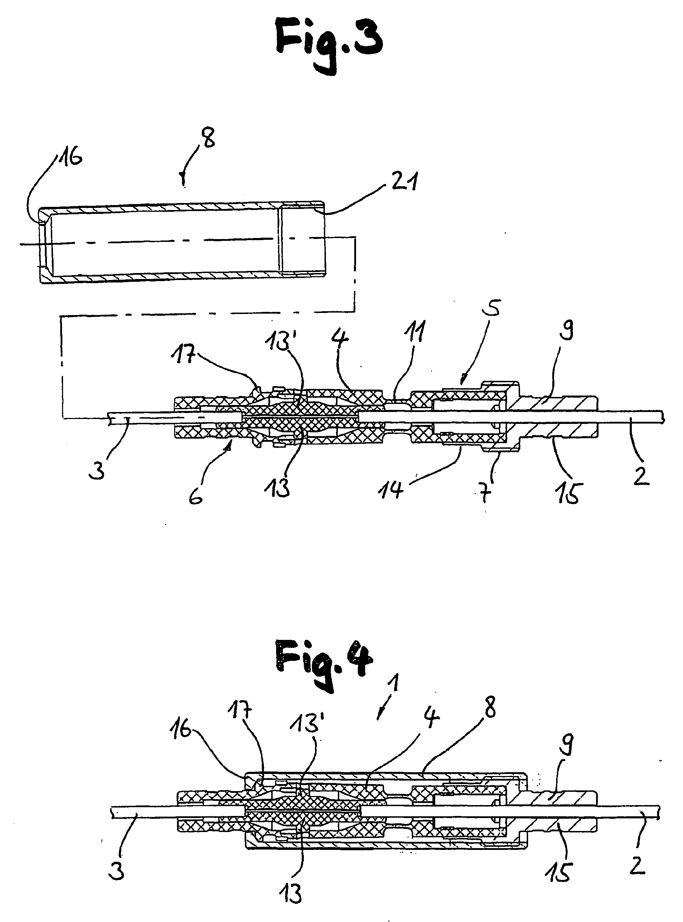

Die Überwurfhülse 8 ist vom zweiten Kabelaufnahmeabschnitt 6 her auf die Kabelhalterung 4 aufbringbar und kann zum Abdecken der Kabelhalterung an dieser befestigt werden (vgl. Fig. 3). Dazu ist am ersten Kabelaufnahmeabschnitt 5 ein Aussengewinde 7 vorgesehen. Entsprechend ist auf der Innenseite der Überwurfhülse ein korrespondierendes Innengewinde 21 angeordnet. Durch ein Aufschrauben der Überwurfhülse auf die Kabelhalterung kann eine vorteilhafte Abdeckung und Sicherung der Kabelhalterung hervorgebracht werden.

Das Krimpteil 9 weist einen Aussengewindeabschnitt für das Aussengewinde 7 auf, der zwischen einem Krimpabschnitt 14 zum Krimpen des Krimpteils an das Mantelteil 12 und 12' und einem Endabschnitt 15 liegt. Der Endabschnitt 15 bildet das kabelseitige Ende der Kabelhalterung 4 zum Lichtwellenleiter 2. Durch das Krimpen des Krimpteils 9 an die Kabelhalterung kann auf besonders vorteilhafte Art und Weise eine nahezu unlösbare Verbindung hergestellt werden. Selbstverständlich wäre es auch vorstellbar, auf ein metallisches Krimpteil zu verzichten und beispielsweise direkt auf das Mantelteil 12 bzw. 12' ein Aussengewinde vorzusehen.

In Figur 2 ist das Verbindungsteil 1 gegenüber Figur 1 leicht modifiziert. Wesentlichster Unterschied zum Ausführungsbeispiel gemäss Figur 1 ist insbesondere eine andere Gestaltung des Schutzhülsenteils 13 bzw. 13'. Aus Figur 2 ist deutlich erkennbar, dass die in entsprechenden Aufnahmen mittels Einsteckköpfen eingesetzten Schutzhülsenteile 13 und 13' jeweils beidseitig nach innen abgewinkelte Seitenabschnitte 25 bzw. 25' aufweisen. Dadurch wird erreicht, dass beim Schliessen der Schutzhülse ein vorteilhafter Spanneffekt auf den Lichtwellenleiter ausgeübt wird.

In Figur 3 sind die blanken Leiterenden miteinander verschweisst und die Mantelteile 10 der Kabelhalterung 4 in die Schliessstellung geschwenkt. Vom zweiten Kabelaufnahmeabschnitt her ist die Überwurfhülse 8 zum Abdecken der Kabelhalterung aufbringbar. Zur Befestigung an der Kabelhalterung 4 ist im Bereich des kabelseitigen Endes des ersten Kabelaufnahmeabschnitts 5 das Aussengewinde 7 vorgesehen.

Figur 4 zeigt eine fertiggestellte optische Verbindung zwischen den Lichtwellenleiterkabeln 2 und 3. Ersichtlicherweise befindet sich hier die aufgeschraubte Überwurfhülse 8 in einer Endstellung. Diese Endstellung ist festgelegt durch eine nach innen gerichtete Schulter 16 am kabelseitigen Ende der Überwurfhülse. Die Schulter 16 wirkt mit einem korrespondierenden Rand 17 des Mantelteils 10 und 10' zusammen, der einen Anschlag für die Schulter bildet.

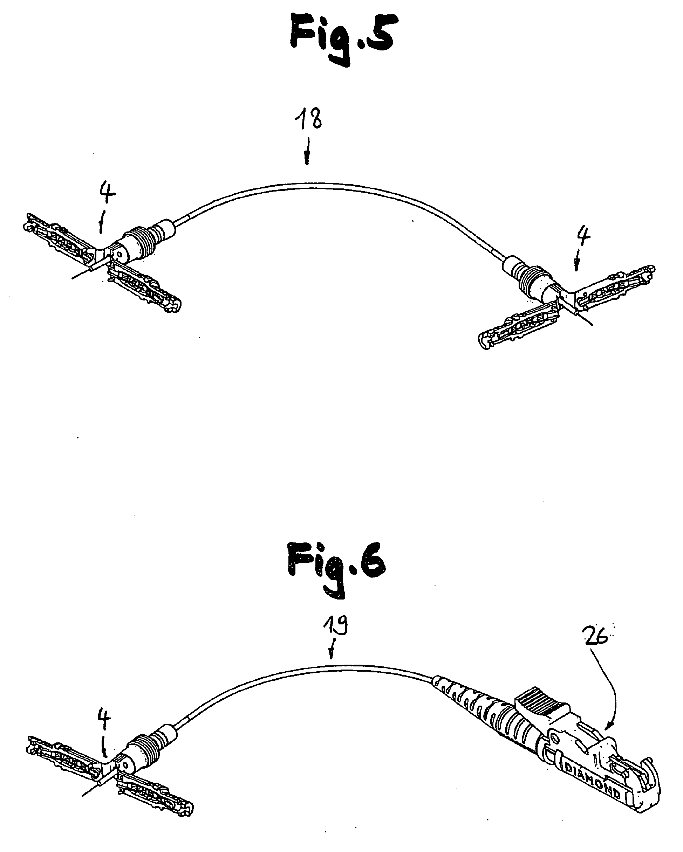

Die Figuren 5 und 6 zeigen bevorzugte Anwendungsgebiete für das vorgängig beschriebene Verbindungsteil. Figur 6 betrifft ein so genanntes Pigtail, d.h. ein Pigtail-Kabel 19, das auf einer Seite mit der Kabelhalterung 4 versehen ist und das auf der anderen Seite mit einem Steckerteil 26, beispielsweise ein Steckerteil vom Typ F-3000™ oder auch E-2000™ usw., ausgerüstet ist. Figur 5 betrifft ein Patchcord-Kabel 18, das zweiseitig mit einer Kabelhalterung 4 versehen ist.

## Patentansprüche

1. Verbindungsteil (1) für eine optische Verbindung eines ersten Lichtwellenleiters (2) mit einem zweiten Lichtwellenleiter (3), mit einer hülsenartigen Kabelhalterung (4) enthaltend einen ersten Kabelaufnahmeabschnitt (5), in dem der erste Lichtwellenleiter (2) aufnehmbar ist und einen zweiten Kabelaufnahmeabschnitt (6), in dem der zweite Lichtwellenleiter (3) aufnehmbar ist, wobei die Lichtwellenleiterenden (23, 24) der beiden Lichtwellenleiter (2, 3) miteinander verschweissbar sind, wobei wenigstens der zweite Kabelaufnahmeabschnitt (6) entlang der Längsmittelachse (L) zusammensetzbar ausgebildet ist, wobei am ersten Kabelaufnahmeabschnitt (5), vorzugsweise am kabelseitigen Ende des ersten Kabelaufnahmeabschnitts Befestigungsmittel (7) vorgesehen sind, mit deren Hilfe eine vom zweiten Kabelaufnahmeabschnitt her aufbringbare Überwurfhülse (8) zum Abdecken der Kabelhalterung befestigbar oder befestigt ist, wobei der zweite Kabelaufnahmeabschnitt (6) wenigstens ein Mantelteil (10, 10') aufweist, das an einem Gelenk (11) um einen bestimmten Schwenkwinkel zwischen einer Öffnungsstellung und einer Schliessstellung schwenkbar ist, wobei das Befestigungsmittel (7) zum Befestigen der Überwurfhülse (8) an der Kabelhalterung (4) eine Schraubverbindung oder eine Schnapp- oder Rastverbindung ist.

2. Verbindungsteil (1) nach Anspruch 1, **dadurch gekennzeichnet, dass** das Befestigungsmittel (7) zum Befestigen der Überwurfhülse (8) an der Kabelhalterung (4) eine Schraubverbindung ist.

3. Verbindungsteil (1) nach Anspruch 1 oder 2, **dadurch gekennzeichnet, dass** im Bereich des kabelseitigen Endes des ersten Kabelaufnahmeabschnitts ein Aussengewinde (7) für eine Schraubverbindung mit der Überwurfhülse (8) vorgesehen ist.

4. Verbindungsteil (1) nach Anspruch 3, **dadurch gekennzeichnet, dass** das Aussengewinde (7) an einem am kabelseitigen Ende der Kabelhalterung angeordneten Krimpteil, (9) aus Metall vorgesehen ist.

5. Verbindungsteil (1) nach Anspruch 4, **dadurch gekennzeichnet, dass** der erste Kabelaufnahmeabschnitt (5) einstückig ausgebildet ist und dass der zweite Kabelaufnahmeabschnitt (6) aus zwei Mantelteilen (10, 10') besteht, die je über ein Gelenk (11) mit dem ersten Kabelaufnahmeabschnitt verbunden sind.

6. Kabelanordnung mit einem Kabel enthaltend einen Lichtwellenleiter (2), dessen wenigstens eine Ende durch ein Verbindungsteil gemäss einem der Ansprüche 1 bis 5 gebildet ist.

7. Kabelanordnung gemäss Anspruch 6, **dadurch gekennzeichnet, dass** die Kabelanordnung ein Pigtail, welches auf der einen Seite ein Verbindungsteil und auf der anderen Seite ein Steckerteil aufweist, oder ein Patchcord, welches auf beiden Seiten ein verbindungsteil aufweist, ist.

8. Verfahren zum Verbinden zweier Lichtwellenleiter (2, 3) mit einem Verbindungsteil nach einem der Ansprüche 1 bis 5 mit einem wenigstens abschnittsweise entlang einer Längsmittelachse (L) zusammensetzbar ausgebildeten hülsenartigen kabelhalterung (4) mit zwei Mantelteilen (10, 10'), **dadurch gekennzeichnet, dass**
- in die Kabelhalterung (4) ein blankes Leiterende (22) eines ersten Lichtwellenleiters (2) und ein gegenüberliegendes blankes Leiterende (23) eines zweiten Lichtwellenleiters (3) eingeführt werden,
- dass die blanken Leiterenden miteinander verschweisst werden, wobei die Schweissstelle im Schwenkbereich der Mantelteile liegt,
- dass anschliessend die Mantelteile in die Schliessstellung geschwenkt werden,
- und dass eine Überwurfhülse (8) zum Abdecken der Kabelhalterung aufgebracht und an dieser befestigt wird.

## Claims

1. Connecting part (1) for an optical connection of a first optical waveguide (2) to a second optical waveguide (3), having a sleeve-like cable holder (4) containing a first cable holding section (5) in which the first optical waveguide (2) can be held, and a second cable holding section (6) in which the second optical waveguide (3) can be held, in which case the optical waveguide ends (23, 24) of the two optical waveguides (2, 3) can be welded to one another, with at least the second cable holding section (6) being designed such that it can be joined together along the longitudinal center axis (L), with attachment means (7) being provided on the first cable holding section (5), preferably at the cable-side end of the first cable holding section, with the aid of which a covering sleeve (8), which can be fitted from the second cable holding section, is attached or can be attached in order to cover the cable holder, with the second cable holding section (6) having at least one casing part (10, 10') which can be pivoted on a joint (11) through a specific pivoting angle between an open position and a closed position, with the attachment means (7) for attachment of the covering sleeve (8) to the cable holder (4) being a screw connection or a snap-action or latching connection.

2. Connecting part (1) according to Claim 1, **characterized in that** the attachment means (7) for attachment of the covering sleeve (8) to the cable holder (4) is a screw connection.

3. Connecting part (1) according to Claim 1 or 2, **characterized in that** an external thread (7) for a screw connection to the covering sleeve (8) is provided in the area of the cable-side end of the first cable holding section.

4. Connecting part (1) according to Claim 3, **characterized in that** the external thread (7) is provided on a crimp part (9), which is arranged at the cable-side end of the cable holder and is composed of metal.

5. Connecting part (1) according to Claim 4, **characterized in that** the first cable holding section (5) is formed integrally, and **in that** the second cable holding section (6) comprises two casing parts (10, 10') which are each connected via a joint (11) to the first cable holding section.

6. Cable arrangement having a cable containing an optical waveguide (2), whose at least one end is formed by a connecting part according to one of Claims 1 to 5.

7. Cable arrangement according to Claim 6, **characterized in that** the cable arrangement is a pigtail having a connecting part on one side and a plug part on the other side, or a patchcord having a connecting part on both sides.

8. Method for connection of two optical waveguides (2, 3) by means of a connecting part according to one of Claims 1 to 5 having a sleeve-like cable holder (4) which is designed at least in places such that it can be joined together along a longitudinal center axis (L) and has two casing parts (10, 10'), **characterized in that**
- a bare conductor end (22) of a first optical waveguide (2) and an opposite bare conductor end (23) of a second optical waveguide (3) are inserted into the cable holder (4),
- **in that** the bare conductor ends are welded to one another, with the weld point being located in the pivoting area of the casing parts,
- **in that** the casing parts are then pivoted to the closed position,
- and **in that** a covering sleeve (8) is fitted in order to cover the cable holder, and is attached to it.

## Revendications

1. Élément de liaison (1) pour une liaison optique d'une première fibre optique (2) avec une deuxième fibre optique (3), avec un support de câble (4) en forme de coquille contenant une première section d'hébergement de câble (5), dans laquelle la première fibre optique (2) peut être hébergée et une deuxième section d'hébergement de câble (6) dans laquelle la deuxième fibre optique (3) peut être hébergée, les extrémités de fibres optiques (23, 24) des deux fibres optiques (2, 3) pouvant être soudées l'une à l'autre, au moins la deuxième section d'hébergement de câble (6) étant formée de manière à pouvoir s'assembler le long de son axe central longitudinal (L), des moyens de fixation (7) étant prévus sur la première section d'hébergement de câble (5), de préférence à l'extrémité côté câble de la première section d'hébergement de câble, permettant de fixer ou fixant un manchon de couverture (8) pouvant s'appliquer à partir de la deuxième section d'hébergement de câble pour recouvrir le support de câble, la deuxième section d'hébergement de câble (6) comportant au moins une pièce en coque (10, 10'), pouvant basculer à une articulation (11) d'un certain angle de basculement entre une position ouverte et une position fermée, le moyen de fixation (7) pour fixer le manchon de couverture (8) au support de câble (4) étant une liaison par vissage ou une liaison par encliquetage ou par cran.

2. Élément de liaison (1) selon la revendication 1, **caractérisé en ce que** le moyen de fixation (7) pour fixer le manchon de couverture (8) au support de câble (4) est une liaison par vissage.

3. Élément de liaison (1) selon la revendication 1 ou 2, **caractérisé en ce que** dans la région de l'extrémité côté câble de la première section d'hébergement de câble, un filetage externe (7) est prévu pour une liaison par vissage avec le manchon de couverture (8).

4. Élément de liaison (1) selon la revendication 3, **caractérisé en ce que** le filetage externe (7) est prévu sur une pièce à sertir (9) en métal, disposée à l'extrémité côté câble du support de câble.

5. Élément de liaison (1) selon la revendication 4, **caractérisé en ce que** la première section d'hébergement de câble (5) est formée d'une seule pièce et **en ce que** la deuxième section d'hébergement de câble (6) est constituée de deux pièces en coque (10, 10'), reliées par l'intermédiaire d'une articulation (11) à la première section d'hébergement de câble.

6. Agencement de câble avec un câble contenant une fibre optique (2), dont au moins une de ses extrémités est constituée d'un élément de liaison selon une des revendications 1 à 5.

7. Agencement de câble selon la revendication 6, **caractérisé en ce que** l'agencement de câble est une queue spirale comportant d'un côté un élément de liaison et de l'autre côté une pièce de connexion, ou un cordon de raccordement comportant des deux côtés un élément de liaison.

8. Procédé pour relier deux fibres optiques (2, 3) avec un élément de liaison selon une des revendications 1 à 5 avec un support de câble (4) en forme de coquille avec deux pièces en coque (10, 10') pouvant s'assembler au moins par section le long d'un axe central longitudinal (L), **caractérisé en ce que**
- une extrémité dénudée du conducteur (23) d'une première fibre optique (2) et une extrémité opposée dénudée du conducteur (24) d'une deuxième fibre optique (3) sont introduites dans le support de câble (4),
- les extrémités dénudées sont soudées l'une à l'autre, l'endroit de la soudure étant situé dans la région de basculement des pièces en coque,
- les pièces en coque sont ensuite basculées en position fermée,
- et **en ce qu'**un manchon de couverture (8) pour recouvrir le support de câble est monté par-dessus et fixé à celui-ci.
